Europäisches Patentamt

(19) European Patent Office　　　(11) Numéro de publication : **0 188 168**
　　Office européen des brevets　　　　　　　　　　　　　　**B1**

⑫　　　　　　　FASCICULE DE BREVET EUROPÉEN

(45) Date de publication du fascicule du brevet :　　(51) Int. Cl.⁴ : **H 02 G　3/04**
　　**11.10.89**

(21) Numéro de dépôt : **85440074.4**

(22) Date de dépôt : **12.12.85**

(54) **Goulotte de distribution composable.**

(30) Priorité : **13.12.84 FR 8419479**

(43) Date de publication de la demande :
　　**23.07.86 Bulletin 86/30**

(45) Mention de la délivrance du brevet :
　　**11.10.89 Bulletin 89/41**

(84) Etats contractants désignés :
　　**AT CH DE GB IT LI SE**

(56) Documents cités :
　　**EP—A— 0 063 733**
　　**EP—A— 0 149 377**
　　**DE—A— 2 516 404**
　　**DE—B— 2 136 752**
　　**FR—A— 2 219 549**

(73) Titulaire : **CONCEPTAL, Sàrl**
　　**30, route de Paris**
　　**F-67370 Ittenheim (FR)**

(72) Inventeur : **Ramstein, Roland**
　　**30, route de Paris**
　　**F-67370 Ittenheim (FR)**

(74) Mandataire : **Nuss, Pierre**
　　**10, rue Jacques Kablé**
　　**F-67000 Strasbourg (FR)**

## Description

La présente invention concerne le domaine de la distribution électrique et/ou d'autres circuits informatiques et téléphoniques, en particulier dans des locaux de bureaux et commerciaux, et a pour objet une goulotte de distribution composable.

Actuellement, la distribution électrique et d'autres circuits informatiques et téléphoniques dans des locaux de bureaux et commerciaux est généralement réalisée au moyen de goulottes ou de plinthes en aluminium à fixer le long des parois desdits locaux et présentant des cloisons de séparation amovibles ou fixes.

Ces goulottes ou plinthes connues sont adaptées à la réception d'un certain nombre de conduites ou de câbles en fonction des locaux à desservir et de leurs besoins en équipements électriques, informatiques et téléphoniques, et une extension des possibilités de distribution, et donc de branchement n'est possible que par adjonction à la plinthe ou à la goulotte d'une autre plinthe ou goulotte, généralement par superposition desdites plinthes ou goulottes.

Cependant une telle superposition des goulottes ou plinthes, dont la fermeture est effectuée au moyen de couvercles maintenus par encliquetage et déformation élastique des bords adjacents, ne permet pas l'obtention d'ensembles uniformes, les plinthes ou goulottes rajoutées par superposition pouvant différer dans leurs formes et dimensions. En outre, une adaptation précise aux besoins est difficile à réaliser, les plinthes ou goulottes présentant des dimensions fixes non modulaires et une superposition d'un grand nombre de goulottes empêche quasiment une dépose des couvercles, du fait que la déformation des bords desdites goulottes n'est plus possible.

On a alors pensé à réaliser des goulottes composables formés d'éléments modulaires · à fermeture frontale au moyen de couvercles à encliquetage ainsi que d'un élément de recouvrement de l'élément modulaire supérieur. Mais ces goulottes ne peuvent pas être complétées, en cas d'une extension des circuits de distribution, par simple enlèvement de l'élément de recouvrement mise en place d'un élément modulaire supplémentaire, et remise en place de l'élément de recouvrement. Un démontage de tout ou partie de l'installation est toujours nécessaire.

Les documents FR-A-2 219 549 et DE-B-2 136 752 décrivent des goulottes de distribution du genre mentionné ci-dessus.

La présente invention a pour but de pallier ces inconvénients.

Elle a, en effet, pour objet une goulotte de distribution composable, essentiellement constituée par des éléments modulaires à fermeture frontale au moyen de couvercles à encliquetage, et par un élément de recouvrement de l'élément modulaire supérieur, caractérisée en ce que les bords des éléments modulaires sont reliés entre eux par des clips de liaison et coopèrent avec des organes de fixation consistant respectivement en une rainure de section trapézoïdale, ou autre, des bords supérieur et inférieur des éléments, cette rainure étant partiellement fermée par une bordure en saillie des parties de raccordement desdits bords, et en un profil en U à ailes inégales, dont l'aile la plus courte prolonge la partie libre des bords, et dont l'aile la plus longue est tournée vers la partie interne de l'élément, et présente une saillie longitudinale au niveau de sa jonction avec l'âme du profil en U.

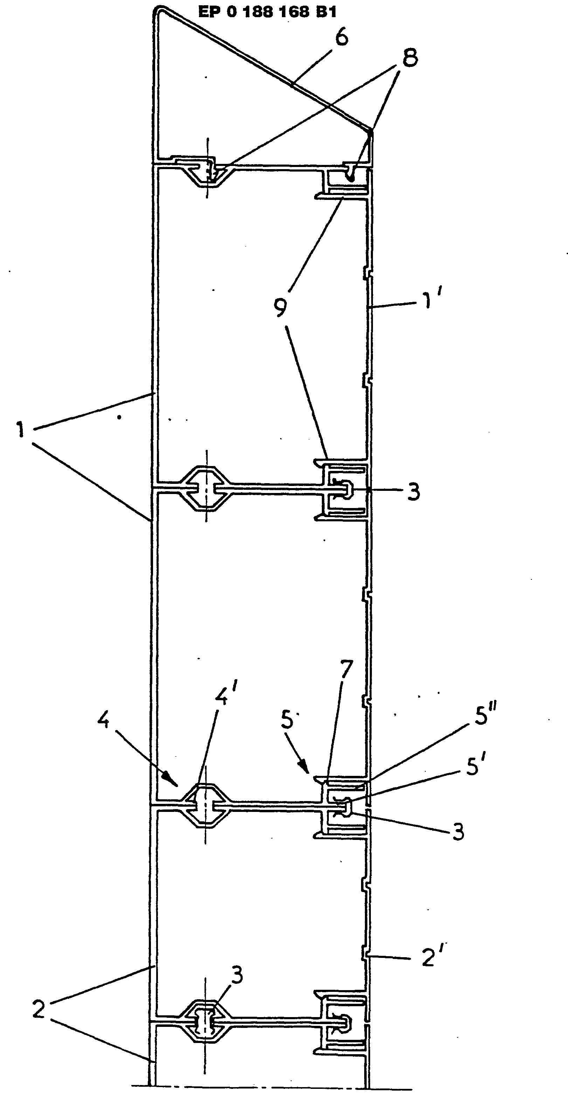

L'invention sera mieux comprise grâce à la description ci-après, qui se rapporte à un mode de réalisation préféré, donné à titre d'exemple non limitatif, et expliqué avec référence au dessin schématique annexé, dont la figure unique est une vue en coupe d'une goulotte conforme à l'invention.

Le dessin annexé représente une goulotte de distribution dont les bords des éléments modulaires 1 et 2 sont reliés entre eux par des clips 3 de liaison et coopèrent avec des organes de fixation 4 et 5 consistant respectivement en une rainure 4 de section trapézoïdale, ou autre, des bords supérieur et inférieur des éléments 1 et 2, cette rainure étant partiellement fermée par une bordure 4' en saillie des parties de raccordement desdits bords, et en un profil en U 5 à ailes inégales, dont l'aile la plus courte 5' prolonge la partie libre des bords, et dont l'aile la plus longue 5" est tournée vers la partie interne de l'élément 1 ou 2, et présente une saillie longitudinale 7 au niveau de sa jonction avec l'âme du profil en U 5.

Les clips 3 sont constitués en un matériau élastiquement déformable et sont, de manière connue, sous forme de pinces à section sensiblement en U, et dont les ailes présentent des évidements longitudinaux en forme de rainures tournées l'une vers l'autre.

Pour la liaison de deux éléments 1, ou 2, ou 1 et 2 entre eux par superposition, il suffit de disposer à intervalles réguliers, dans la rainure supérieure 4 de l'élément inférieur des clips 3 de telle manière que les évidements longitudinaux de ces derniers s'enclenchent sur les bordures en saillie 4' de ladite rainure 4, puis de placer l'élément supérieur sur le premier et d'enclencher la rainure 4 de cet élément sur les clips 3. D'autres clips 3 sont alors emmanchés sur les ailes 5' des bords des éléments pour pincer ces derniers, de sorte que la liaison des éléments entre eux est garantie.

L'élément 6 de recouvrement de l'élément modulaire supérieur 1 ou 2 est réalisé sous forme d'un élément profilé extrudé présentant à sa partie inférieure deux languettes élastiques de verrouillage 8 destinées à coopérer, pour la fixation de l'élément 6 sur ledit élément modulaire supérieur, l'une avec l'aile plus courte 5' de l'organe de fixation 5, et l'autre avec la bordure 4' du côté du bord de l'élément 1 ou 2 adjacent à l'organe 5 de l'organe de fixation 4.

Les éléments 1 et 2 sont avantageusement réalisés par extrusion ensemble avec leurs organes de fixation 4 et 5.

Les couvercles 1′ et 2′ sont également réalisés, par extrusion et présentent des bandes longitudinales 9 de fixation s'étendant perpendiculairement en saillie sur leur face arrière et destinées à coopérer avec les saillies longitudinales 7 des organes 5 par déformation élastique. Grâce à ce mode de réalisation des couvercles 1′ et 2′, il est possible de les monter et de les retirer des éléments 1 et 2 formant la goulotte, seules les bandes 9 se déformant élastiquement pendant ces opérations.

Le mode de réalisation d'une goulotte composable conforme à l'invention permet l'installation d'une goulotte de distribution parfaitement adaptée aux besoins, et qui peut être facilement complétée, en cas d'une extension des circuits de distribution, par simple enlèvement de l'élément 6 de recouvrement, mise en place d'un élément modulaire 1 ou 2, et remise en place de l'élément 6.

## Revendications

1. Goulotte de distribution composable, essentiellement constituée par des éléments modulaires (1 et 2) à fermeture frontale au moyen de couvercles (1′ et 2′) à encliquetage, et par un élément (6) de recouvrement de l'élément modulaire supérieur (1 ou 2), caractérisée en ce que les bords des éléments modulaires (1 et 2) sont reliés entre eux par des clips (3) de liaison et coopèrent avec des organes de fixation (4 et 5) consistant respectivement en une rainure (4) de section trapézoïdale, ou autre, des bords supérieur et inférieur des éléments (1 et 2), cette rainure étant partiellement fermée par une bordure (4′) en saillie des parties de raccordement desdits bords, et en un profil en U (5) à ailes inégales, dont l'aile la plus courte (5″) prolonge la partie libre des bords, et dont l'aile la plus longue (5′) est tournée vers la partie interne de l'élément (1 ou 2), et présente une saillie longitudinale (7) au niveau de sa jonction avec l'âme du profil en U (5).

2. Goulotte, suivant la revendication 1, caractérisée en ce que l'élément (6) de recouvrement de l'élément modulaire supérieur (1 ou 2) est réalisé sous forme d'un élément profilé extrudé présentant à sa partie inférieure deux languettes élastiques de verrouillage (8) destinées à coopérer, pour la fixation de l'élément (6) sur ledit élément modulaire supérieur, l'une avec l'aile plus courte (5′) de l'organe de fixation (5), et l'autre avec la bordure (4′) du côté du bord de l'élément (1 ou 2) adjacent à l'organe (5) de l'organe de fixation (4).

3. Goulotte, suivant l'une quelconque des revendications 1 et 2, caractérisée en ce que les éléments (1 et 2) sont réalisés par extrusion ensemble avec leurs organes de fixation (4 et 5).

4. Goulotte, suivant l'une quelconque des revendications 1 à 3, caractérisée en ce que les couvercles (1′ et 2′) sont également réalisés, par extrusion et présentent des bandes longitudinales (9) de fixation s'étendant perpendiculairement en saillie sur leur face arrière et destinées à coopérer avec les saillies longitudinales (7) des organes (5) par déformation élastique.

## Claims

1. Composite distribution ducting, essentially made up of modular elements (1 and 2) closable at the front by means of snap-on covers (1′ and 2′), and of an element (6) for covering the upper modular element (1 or 2), characterised in that the sides of the modular elements (1 and 2) are attached to one another by connecting clips (3) and co-operate with fixing members (4 and 5) consisting, in each case, of a groove (4) of trapezoidal or other cross section in the upper and lower sides of the elements (1 and 2), this groove being partially closed by a rim (4′) projecting from the connecting portions of said sides, and of a U-shaped profile (5) with unequal arms, of which the shorter arm (5′) extends the free portion of the sides and of which the longer arm (5″) is turned toward the internal portion of the element (1 or 2) and has a longitudinal projection (7) in the region where it is joined to the core of the U-shaped profile (5).

2. Ducting according to Claim 1, characterised in that the element (6) covering the upper modular element (1 or 2) is produced in the form of an extruded profiled element having, at its bottom, two elastic locking tabs (8) of which one is intended to co-operate with the shorter arm (5′) of the fixing member (5) and the other with the edge of the rim (4′) of the fixing member (4) adjacent to the member (5) on the side of the element (1 or 2), in order to fix the element (6) on said upper modular element.

3. Ducting according to any one of Claims 1 and 2, characterised in that the elements (1 and 2) are produced by extrusion together with their fixing members (4 and 5).

4. Ducting according to any one of Claims 1 to 3, characterised in that the covers (1′ and 2′) are also produced by extrusion and have longitudinal fixing strips (9) which project perpendicularly from their rear face and are intended to co-operate with the longitudinal projection (7) of the members (5) by elastic deformation.

## Patentansprüche

1. Zusammengesetzter Verteilungskanal, im wesentlichen bestehend aus Modularelementen (1 und 2), die frontal mit Hilfe von Rastdeckeln (1′ und 2′) verschlossen werden, und aus einem Element (6) zur Abdeckung des oberen Modularelements (1 oder 2), dadurch gekennzeichnet, daß die Stoßkanten der Modularelemente (1 und 2) miteinander mittels Verbindungsklemmen (3) verbunden sind und mit Befestigungsorganen (4 und 5) zusammenwirken, die je aus einer Nut (4) mit trapezförmigem Querschnitt, oder ähnlichem, der oberen und unteren Kanten der Elemente (1 und 2) bestehen, wobei diese Nut teilweise durch eine über die Anschlußteile der Kanten überstehende Einfassung (4') geschlossen wird, und ein U-Profil (5) mit ungleichen Schenkeln, dessen kürzerer Schenkel (5') den freien Teil der Kanten verlängert und der längere Schenkel (5") dem Innenteil des Elements (1 oder 2) zugekehrt ist, und in Höhe seiner Verbindung mit dem Steg des U-Profils (5) einen Längsvorsprung (7) aufweist.

2. Verteilungskanal nach Anspruch 1, dadurch gekennzeichnet, daß das Element (6) zur Abdeckung des oberen Modularelements (1 oder 2) als strangepreßtes Profil ausgeführt ist, das an seinem unteren Teil zwei elastische Zungen zur Verriegelung (8) aufweist, die dazu dienen, zur Befestigung des Elements (6) an dem oberen Modularelement, die eine mit dem kürzeren Schenkel (5') des Befestigungsorgans (5), und die andere mit der Einfassung (4') an der Seite der Kante des Elements (1 oder 2) das an dem Organ (5) des Befestigungsorgans (4) anliegt, zusammenzuwirken.

3. Verteilungskanal nach einem der Ansprüche 1 und 2, dadurch gekennzeichnet, daß die Elemente (1 und 2) zusammen mit ihren Befestigungsorganen (4 und 5) durch Strangpressen hergestellt werden.

4. Verteilungskanal nach einem der Ansprüche 1 bis 3, dadurch gekennzeichnet, daß die Deckel (1' und 2') ebenfalls durch Strangpressen hergestellt werden und Längsstreifen (9) zur Befestigung aufweisen, die sich senkrecht vorstehend von ihrer Rückseite erstrecken und dazu dienen, mit Längsvorsprüngen (7) der Organe (5) mittels elastischer Verformung zusammenzuwirken.

EP 0 188 168 B1